# EUROPEAN PATENT SPECIFICATION

(11) **EP 3 839 386 B1**
(45) Date of publication and mention of the grant of the patent: **10.05.2023**
(21) Application number: 20210982.3
(22) Date of filing: 01.12.2020
(51) Int. Cl.: F25D 23/02

(54) **REFRIGERATOR DOOR AND MANUFACTURING METHOD THEREOF**
KÜHLSCHRANKTÜR UND HERSTELLUNGSVERFAHREN DAFÜR
PORTE DE RÉFRIGÉRATEUR ET SON PROCÉDÉ DE FABRICATION

(30) Priority: 18.12.2019 KR 20190169663
(43) Date of publication of application: 23.06.2021
(73) Proprietor: LG Electronics Inc., Yeongdeungpo-gu Seoul 07336 (KR)
(72) Inventor: KIM, Jonggoo, Seoul 08592 (KR); KIM, Taeyoung, Seoul 08592 (KR); OH, Kisoo, Seoul 08592 (KR); KANG, ChangJu, Seoul 08592 (KR); CHO, Hyunkeun, Seoul 08592 (KR)
(74) Representative: Ter Meer Steinmeister & Partner

(56) References cited:
- EP-A2- 0 249 299
- KR-A- 20140 027 442
- KR-B1- 101 348 602

## Description

### BACKGROUND OF THE INVENTION

### Field of the Invention

The present disclosure relates generally to a refrigerator and a refrigerator door. More particularly, the present disclosure relates to a refrigerator door and a manufacturing method thereof, wherein a foam cushion is formed by the automatic application of spray foam.

### Description of the Related Art

EP 0 249 299 A2 describes a method and apparatus according to the preamble of claim 1 whereby a reactive polyurethane mixture is fed into the upwardly open door backing panel while this rests on a profiled mould support, to form a soft or elastically yieldable expanded polyurethane mass. The outer metal wall of the door is then superposed on the door backing panel without removing the door backing panel from the mould. The assembly formed from the outer metal wall and door backing panel defines an empty compartment into which a reactive polyurethane mixture is injected to produce a non-elastically yieldable expanded polyurethane mass which forms the thermal insulation. This injection takes place while said assembly is disposed together with the mould between two counteracting surfaces.

KR 2014 0027442 A relates to a method for manufacturing a refrigerator and a door of the same. A vacuum insulation material is located in the center of the inside of the door of the refrigerator and is separated from the upper surface, the lower surface, the front surface, the rear surface, and both sides. A foam insulation material is evenly arranged in the rest space. The refrigerator includes a main body; a storage chamber formed in the main body in order for the front surface to be opened; and the door opening and closing the open front surface of the storage chamber.

KR 101 348 602 B1 describes an aluminum complex sheet for preventing flexure attachable to a refrigerator door which is attached to the inner surface of the door of a refrigerator, dispersing pressure equally when injecting bubble solution for configuring an insulator and when configuring, to prevent flexure and deformation of the exterior, at the same time preventing dew condensation on the exterior of the door caused by the difference of temperatures between the exterior and the interior sides of the refrigerator.

Generally, a refrigerator is a home appliance that allows food to be stored at low temperatures in an internal storage space that is opened and closed by a refrigerator door.

To this end, the refrigerator is configured to store the stored food in an optimal state by cooling the inside of the storage space by using cold air generated through heat exchange with refrigerant circulating in a refrigeration cycle.

Recently, a refrigerator is gradually becoming larger and multifunctional in accordance with the change of dietary life and the trend of high-end products, and designs having various exteriors are being released according to a user's taste.

Particularly, when the refrigerator is installed, a refrigerator door which occupies most of the entire exterior thereof may be the most important factor in the design of the exterior. Recently, it has become possible that the exterior of the door of a refrigerator is formed of metal to form more diverse and luxurious exteriors.

In the case of the refrigerator having the exterior made of such a metal material, during the injection of liquid foam for forming an insulator, areas in which the liquid foam is not filled may be formed. In this case, the insulator formed by the liquid foam may have different sectional areas. As a result, the exterior of the front surface of the door may be transformed to be curved.

Particularly, such a problem may appear more prominently in the front surface of the refrigerator door, and in the case in which the front surface of the refrigerator door is formed of metal, even a small curve formed on the front surface may appear prominent during the reflection of light thereon.

A door for a refrigerator and a manufacturing method of the same is disclosed in Korean Patent Application Publication No. 10-2010-0046525, in which a foam heat blocking member blocking heat is provided to prevent the surface of the door from being curved.

However, in such a prior art, in the case in which gas of the liquid foam is discharged and the liquid foam is contracted when the liquid foam has increased pressure and expanded during the injection of the liquid foam, the surface of the door may be curved according to the change of the volume of the liquid foam.

In addition, during the injection of the liquid foam, the insulator may not be evenly formed on the entirety of the door, and the insulator may have different thicknesses due to foam unevenness, so the surface of the door may be curved.

Furthermore, a combining force between the liquid foam and the foam heat blocking member is low. Accordingly, when the liquid foam hardens and the insulator is formed, space may be defined between the foam heat blocking member and the insulator, and thus the surface of the door may be curved und uneven.

Accordingly, in a refrigerator door and a curve prevention sheet for refrigerator disclosed in Korean Patent No. 10-1870509, the curve prevention sheet is provided in a door of a refrigerator, whereby during the expansion and contraction of liquid foam injected to form an insulator, polyurethane foam act as a buffer, and may prevent an outer plate from being curved.

However, in such a prior art, the surface of the door can be prevented from being curved, but the structure of the curve prevention sheet is complicated, and thus material cost is increased. Furthermore, such a sheet is required to be manually attached to the surface of the door, and thus productivity is decreased and defects may occur according to the ability of a worker.

### SUMMARY OF THE INVENTION

Accordingly, the present disclosure has been made keeping in mind the above problems occurring in the related art, and the present disclosure is intended to propose a refrigerator door, wherein due to a foam structure, the exterior (a front surface) of the door is prevented from rippling.

The present disclosure is intended to propose a foaming method to prevent any rippling or unevenness of the refrigerator door.

The present disclosure is intended to propose a refrigerator door, wherein a soft foam cushion is formed by the automatic application of a polyurethane foam to prevent the rippling of the exterior of the door

The present disclosure is intended to propose a manufacturing method of the refrigerator door formed by foaming.

The object is solved by the features of the independent claims. Preferred embodiments are given in the dependent claims.

The basic idea is to use a double foaming method and to provide a double foaming structure.

In order to achieve the above objectives, according to one aspect of the present disclosure, there is provided a refrigerator door including a foam cushion formed on a rear surface of an outer plate by a spray application method according to claim 1, respectively claim 7.

The foam cushion is made of the material of hardness lower than the hardness of the insulator provided in the door.

The foam cushion may be made of soft polyurethane (PU).

A manufacturing method of the refrigerator door according to the present disclosure includes applying spray the rear surface of the outer plate.

In the refrigerator door according to the present disclosure, the foam cushion and the insulator are formed by double foaming. Accordingly, work efficiency is improved and defects are decreased

The foam cushion formed by a spray application method may be provided even in a cabinet of present disclosure. Accordingly, the manufacturing efficiency of the cabinet may be improved.

The refrigerator door according to the present disclosure includes all the features as laid down in claim 1.

In addition, the foam cushion is formed by the spray application method.

The foam cushion may be made of the soft polyurethane (PU).

The hardness of the foam cushion may be 20~30 Shore.

Generally, the hardness value is a numerical value and may be measured with the 'Asker C type soft part hardness tester.

The insulator may be made of rigid polyurethane (PU).

The hardness of the insulator may be 60~70 Shore.

The thickness of the foam cushion may be 2~3mm.

The foam cushion is formed by applying the polyurethane (PU) to the rear surface of the outer plate such that the polyurethane has a thickness of 0.15mm.

The foam cushion may be formed on the entirety of the rear surface of the outer plate.

The insulator is formed after the foam cushion is formed on the rear surface of the outer plate.

The manufacturing method of the refrigerator door according to the present disclosure includes all the features of claim 7 such as: supplying the outer plate by forming the outer plate; spraying performed on the rear surface of the outer plate; assembling a cap decoration with the upper or lower end of the outer plate; assembling the door liner with the outer plate such that the door liner is spaced apart from the outer plate; filling the liquid foam in the space between the outer plate and the door liner; and assembling a gasket with the perimeter of the door liner.

The spraying may be the process of forming the foam cushion by applying the soft polyurethane (PU) to the rear surface of the outer plate.

In the spraying, the thickness of the polyurethane (PU) applied to the rear surface of the outer plate may be 0.15mm.

The foam cushion may have a thickness of 2~3mm.

The filling may be the process of forming the insulator in the space between the outer plate and the door liner

The filling may be the process of injecting the undiluted solution of the rigid polyurethane (PU) into the space between the outer plate and the door liner.

The foam cushion may have elasticity greater than elasticity of the insulator.

The filling may be performed after the soft polyurethane (PU) applied to the rear surface of the outer plate in the spraying has been dried.

The foam cushion may expand or contract in correspondence to the contraction and expansion of the insulator and may fill a gap between the outer plate and the door liner.

The hardness of the foam cushion may be 20-30 Shore, and the hardness of the insulator may be 60-70 Shore.

The refrigerator door according to the present disclosure has the following effects.

First, the foam cushion and the insulator may be formed by double foaming inside the refrigerator door according to the present disclosure. That is, the foam cushion in contact with the insulator may be formed by an automatic spray application method. Accordingly, the process of forming the foam cushion and the insulator is simplified more than the process of forming a conventional curve prevention sheet, thereby improving manufacturing efficiency and preventing defects. Furthermore, a soft foam cushion is formed instead of forming the conventional curve prevention sheet having a complicated structure, thereby decreasing material cost.

In addition, in present disclosure, the foam cushion is made of the soft polyurethane (PU), and thus has elasticity greater than the elasticity of the insulator made of rigid polyurethane (PU). Accordingly, even in the case of injecting the liquid foam to form the insulator, the foam cushion may be contracted or expanded according to the pressure of the insulator, thereby automatically filling a gap inside the door.

Furthermore, the spraying is provided even in the manufacturing method of the refrigerator door according to the present disclosure, thereby improving the manufacturing efficiency of the door and preventing defect thereof.

Additionally, even during the configuration of the cabinet of the refrigerator according to present disclosure, the insulator and the foam cushion may be formed by double foaming, thereby improving the manufacturing efficiency of the refrigerator and decreasing defect thereof.

Accordingly, in present disclosure, a soft foam cushion is formed by the automatic application of the polyurethane foam, thereby preventing the exterior of the door or the cabinet of a refrigerator from rippling and increasing work efficiency.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 is a perspective view illustrating the configuration of a refrigerator having a refrigerator door according to the exemplary embodiment of the present disclosure;
FIG. 2 is an exploded perspective view illustrating the configuration of the refrigerator door according to the embodiment of the present disclosure;
FIG. 3 is a cross-sectional view taken along line 3-3' of FIG. 1;
FIG. 4 is a block diagram illustrating a manufacturing method of the refrigerator door according to the present disclosure;
FIGS. 5A, 5B, 5C, 5D, 5E, and 5F illustrate the process of manufacturing the refrigerator door according to the present disclosure; and
FIGS. 6A, 6B, and 6C are sectional views illustrating states in which a foam cushion constituting the refrigerator door is expanded and contracted according to the contraction and expansion of the insulator according to the embodiment of the present disclosure.

### DETAILED DESCRIPTION OF THE INVENTION

Hereinbelow, a refrigerator door according to the present disclosure will be described in detail with reference to the accompanying drawings.

First, in an embodiment of present disclosure, for the convenience of description and understanding, the refrigerator of a bottom freezer type in which a freezer compartment is provided under a refrigerating compartment is illustrated. The present disclosure may be applied to all types of refrigerators in which the insulator is filled inside the refrigerator door and at least a portion of the exterior of the refrigerator door is formed of metal.

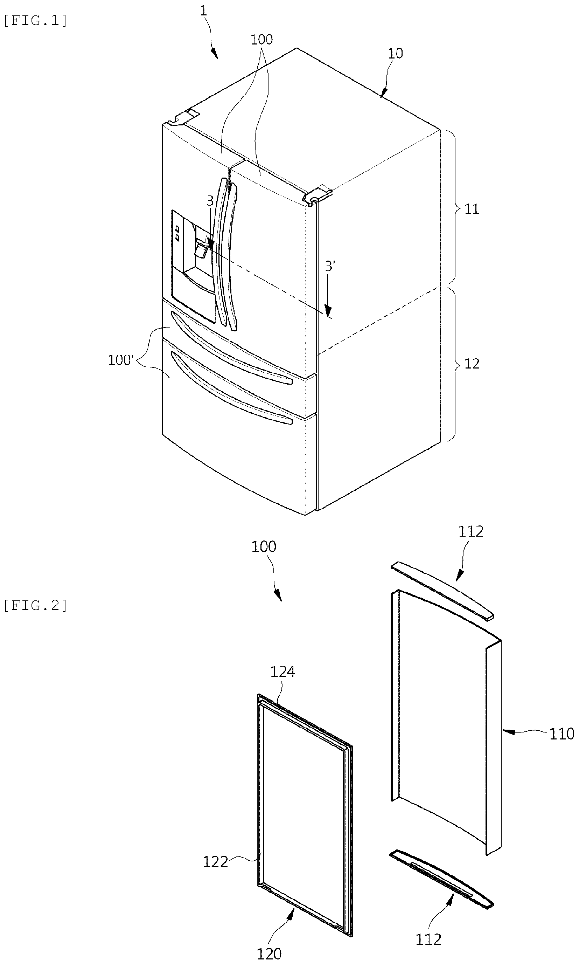

FIG. 1 is a perspective view illustrating an example of the refrigerator having the refrigerator door according to the present disclosure.

As illustrated in FIG. 1, according to the embodiment of present disclosure, the entire exterior of the refrigerator 1 may be constituted by a cabinet 10 having storage space defined therein and the door 100 and 100' opening and closing the storage space defined in the cabinet 10.

The cabinet 10 may be configured as a hexahedral shape having an open front surface, and the storage space inside the cabinet 10 may be partitioned into an upper space and a lower space by a barrier (not shown).

That is, the storage space inside the cabinet 10 may have the refrigerating compartment 11 formed in the upper space of the cabinet 10 and may have the freezer compartment 12 formed in the lower space of the cabinet 10 relative to the barrier or vice versa.

The door 100 and 100' may include a refrigerating compartment door 100 opening and closing the refrigerating compartment 11 and a freezer compartment door 100' opening and closing the freezer compartment 12.

The refrigerating compartment door 100 may be provided in a pair at left and right opposite sides, and may be mounted to the opposite sides of the cabinet 10 to swing.

Accordingly, the refrigerating compartment door 100 may selectively open or close the refrigerating compartment 11 by swinging.

In addition, the pair of refrigerating compartment doors 100 may be swung independently of each other, and thus may partially open and close the front surface of the refrigerating compartment 11.

The freezer compartment door 100' may be provided in the freezer compartment 12 and may have the same structure as a drawer which can be slidably opened and closed. Accordingly, the freezer compartment door 100' may open and close the freezer compartment 12 by being slidably opened and closed.

In the embodiment of present disclosure, a swinging door and/or a drawer may be applied irrespective of the operation method thereof. Hereinafter, for the convenience of understanding and description, the description will be made on the basis of the refrigerating compartment door 100 (hereinafter, simply referred to as a door 100) having a swinging structure.

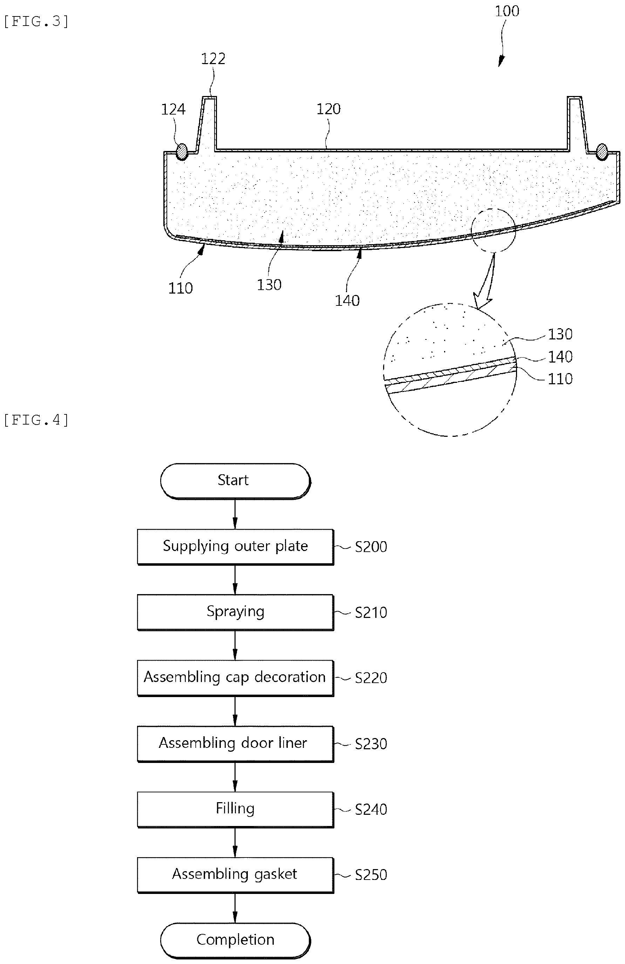

FIG. 2 is an exploded perspective view of the refrigerator door of present disclosure. FIG. 3 is a cross-sectional view taken along line 3-3' of FIG. 1.

As illustrated in these drawings, the refrigerator door according to the present disclosure may include: an outer plate 110 constituting the exterior of the front surface of the door and made of metal; a door liner 120 combined with the outer plate 110 and constituting an exterior of a rear surface of the door; the insulator 130 provided in space between the outer plate 110 and the door liner 120 and made of the polyurethane liquid foam; and a foam cushion 140 formed on the rear surface of the outer plate 110 and having volume changing in correspondence to the change of the volume of the insulator 130.

Accordingly, the door 100 may have an exterior thereof roughly constituted by the outer plate 110 constituting the exterior of the front surface of the door and the door liner 120 constituting the exterior of the rear surface of the door 100. The door may further include cap decorations 112 constituting the upper and lower surfaces of the door 100, but this optional

That is, as illustrated in FIG. 2, each of the cap decorations 112 may be provided on each of the upper and lower ends of the outer plate 110 and the door liner 120 and may constitute the exterior of the upper and lower surfaces of the door 100.

Of course, at least one of the cap decorations 112 may be omitted according to the shape and structure of the door 100.

The outer plate 110 may be made of metal such as a stainless steel plate or a colored steel plate. Additionally, the outer plate 110 may constitute a portion of the surface of the perimeter of the door 100 by bending a plate-shaped metal material.

The front surface of the outer plate 110 exposed to the outside may be subjected to a surface process treatment to have smooth feeling.

In addition, an anti-fingerprint coating or a diffused reflection prevention coating may be provided on the front surface of the outer plate 110, and a film may be attached to or printed on the front surface of the outer plate to implement a color or a pattern thereon.

Furthermore, a portion of the outer plate 110 corresponding to the front surface of the door 100 may be configured to be round. That is, the front surface of the outer plate 110 of the door 100 may be configured to have the shape of a rounded surface.

The door liner 120 may be injection molded out of plastic, and may be combined with the perimeter of the outer plate 110 or corresponding to the outer plate 110.

The door liner 120 may constitute the rear surface of the door 100.

The door liner 120may have a door dike 122 for mounting a door basket thereto and/or a corrugated structure formed integrally with the liner for mounting other components constituting the rear surface of the door 100 thereto.

Additionally, a gasket 124 may be provided along the perimeter of the door liner 120.

Space may be defined between the outer plate 110 and the door liner 120, and the insulator 130 may be formed in the space between the outer plate 110 and the door liner 120.

The insulator 130 may be formed by the liquid foam injected in the state in which the outer plate 110 and the door liner 120 are combined with each other. That is, the insulator 130 may be formed by the liquid foam injected after the outer plate 110, the door liner 120, and the cap decorations 112 are combined with each other and predetermined empty space is defined therein.

Furthermore, the liquid foam may include polyurethane (PU). That is, the insulator 130 may be made of rigid polyurethane (PU), and preferably may be made of polyurethane (PU) having the hardness of 60-70 Shore.

Generally, the hardness value is a numerical value and may be measured with the 'Asker C type soft part hardness tester.

The insulator 130 may completely fill the inside of the door 100, so heat exchange between the inside of the refrigerator and the outside thereof can be prevented.

In addition, such an insulator 130 may be in close contact with the outer plate 110 and the door liner 120, and may prevent the door 100 from being transformed by external impact.

Meanwhile, the foam cushion 140 may be provided on the rear surface of the outer plate 110.

The foam cushion 140 is made of soft polyurethane by the automatic application of polyurethane (PU) spray foam. That is, the foam cushion 140 may be made of the soft polyurethane (PU), and may be formed by a spray application method.

The foam cushion 140 may be evenly formed along the inner surface (the rear surface of the outer plate in FIG. 3) of the outer plate 110 by the spray application to have a predetermined thickness and may buffer the expansion and contraction of the liquid foam.

That is, the foam cushion 140 may be formed on the entirety of the rear surface of the outer plate 110, and may be formed in at least an area of the outer plate 110 which is equivalent to the front surface of the door 100

Accordingly, during the injection of the liquid foam, the liquid foam may be in contact with the foam cushion 140, and may prevent the deformation of the area of the outer plate 110 including the front surface of the door 100.

More particularly, the foam cushion 140 may be made of the soft polyurethane (PU), and preferably may be made of polyurethane (PU) having the hardness of 20-30 Shore.

In addition, the foam cushion 140 may be formed on the entirety of the rear surface of the outer plate 110, and may have a thickness of 2~3mm.

The foam cushion 140 may be formed by the spray application method. That is, the foam cushion 140 may be formed by the automatic application of the polyurethane (PU) to the rear surface of the outer plate 110 such that the polyurethane has a thickness of 0.15mm. Accordingly, the polyurethane (PU) applied to have a thickness of 0.15mm may expand and dry after a predetermined time, and thus may become the foam cushion 140 having a thickness of about 2~3mm.

Accordingly, the foam cushion 140 and the insulator 130 may be formed by double foaming. That is, the foam cushion 140 and the insulator 130 may be formed by the foaming of the polyurethane (PU).

In addition, the foam cushion 140 may be formed prior to the formation of the insulator 130. That is, the insulator 130 may be formed after the foam cushion 140 is formed on the rear surface of the outer plate 110. So the foam cushion is directly contacting the inside of the outer plate 110.

Particularly, the insulator 130 may be formed after the foam cushion 140 is formed by the spray application. That is, the insulator 130 may be formed by the foaming of the polyurethane foam after the foam cushion 140 formed by the spray application has been dried.

The foam cushion 140 may be formed between the insulator 130 and the outer plate 110 to have elasticity. Accordingly, the foam cushion 140 may be in contact with the insulator 130 and may be expanded and contracted according to the contraction and expansion of the insulator 130. That is, the foam cushion 140 may be expanded during the contraction of the insulator 130, and may fill a gap between the insulator 130 and the outer plate 110.

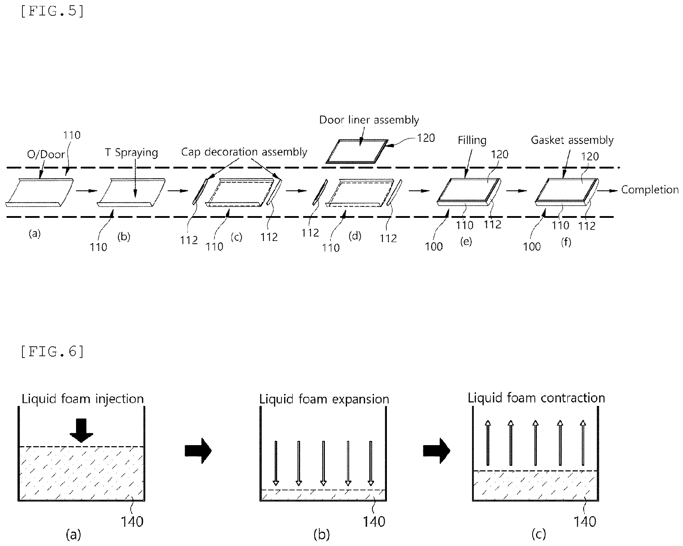

Hereinbelow, a manufacturing method of the refrigerator door according to the present disclosure will be described. That is, the manufacturing method of the door 100 will be described with reference to FIGS. 4 to 6. FIG. 4 is a block diagram illustrating the manufacturing method of the refrigerator door according to the present disclosure; FIGS. 5A, 5B, 5C, 5D, 5E, and 5F illustrate the process of manufacturing the refrigerator door; and FIGS. 6A, 6B, and 6C are sectional views illustrating states in which the foam cushion 140 is expanded and contracted according to the contraction and expansion of the insulator 130.

As illustrated in the drawings, the manufacturing method of the refrigerator door according to the present disclosure may include: supplying the outer plate 110 by forming the outer plate 110 at S200; spraying performed on the rear surface of the outer plate 110 at step S210; assembling the cap decoration 112 with the upper or lower end of the outer plate 110 at step S220; assembling the door liner 120 with the outer plate such that the door liner is spaced apart from the outer plate 110 at step S230; filling the liquid foam in the space between the outer plate 110 and the door liner 120 at step S240; and assembling the gasket 124 with the perimeter of the door liner 120 at step S250.

As illustrated in FIG. 5A, the supplying of the outer plate at step S200 is the process of supplying the outer plate 110 formed of a stainless steel plate or plate-shaped metal material.

The spraying step S210 is the process of forming the foam cushion 140 by applying the soft polyurethane (PU) to the rear surface of the outer plate 110. That is, as illustrated in FIG. 5B, the spraying step S210 is the process of automatically applying the polyurethane (PU) to the rear surface of the outer plate 110, and in the spraying step S210, the thickness of the polyurethane (PU) applied to the rear surface of the outer plate 110 may be 0.15mm.

Accordingly, when the spraying step S210 is completed, the foam cushion 140 may be formed on the rear surface of the outer plate 110, and the foam cushion 140 may have a thickness of 2~3mm. That is, the polyurethane (PU) applied to have a thickness of 0.15mm in the spraying S210 may expand and form the foam cushion 140 having a thickness of about 2~3mm.

After the foam cushion 140 is formed in the spraying step S210, the assembling of the cap decorations at step S220 and the assembling of the door liner at step S230 may be performed as illustrated in FIGS. 5C and 5D.

Accordingly, after the cap decorations 112 are assembled with each of the upper and lower ends of the outer plate 110 and the door liner 120, the predetermined empty space may be defined between the outer plate 110 and the door liner 120, and the liquid foam may be filled in the empty space.

The filling step S240 may be the process of forming the insulator 130 by filling the liquid foam in the space between the outer plate 110 and the door liner 120. That is, the filling step S240 may be the process of filling the polyurethane (PU) liquid foam in the space when the assembling of the cap decorations at step S220 and the assembling of the door liner at step S230 are performed and the predetermined space is defined between the outer plate and the door liner.

As illustrated in FIG. 5E, the filling step S240 may be the process of forming the insulator 130 in the space between the outer plate 110 and the door liner 120. That is, the filling step S240 may be the process of injecting the undiluted solution of the rigid polyurethane (PU) into the space between the outer plate 110 and the door liner 120.

In this case, although not shown in detail, the liquid foam may be injected through a separate inlet.

In addition, the filling step S240 may be performed after the soft polyurethane (PU) applied to the rear surface of the outer plate 110 in the spraying step S210 has been dried.

Meanwhile, the foam cushion 140 may have elasticity greater than the elasticity of the insulator 130. That is, as described above, the hardness of the foam cushion 140 may be 20-30 Shore, and/or the hardness of the insulator 130 may be 60-70 Shore. Or simplified expressed, the hardness of the foam cushion 140 is lower than the hardness of the insulator 130. So the foam cushion 140 is more flexible in its volume than the insulator 130 or the insulator 130 is harder than the foam cushion 140.

Accordingly, the foam cushion 140 may be expanded or contracted in correspondence to the contraction and expansion of the insulator 130, and may fill the gap between the outer plate 110 and the door liner 120.

Accordingly, the example of the contraction and expansion of the foam cushion 140 in the filling S240 is illustrated in FIGS. 6A, 6B, and 6C.

Particularly, as illustrated in FIG. 6A, when the filling S240 proceeds in state in which the foam cushion 140 is formed to have a predetermined thickness, the liquid foam may be injected and expanded. Accordingly, as illustrated in FIG. 6B, the foam cushion 140 may be contracted by being pushed due to the expansion of the liquid foam.

Next, when the liquid foam (the insulator) filled in the door 100 contracts, the volume of the foam cushion 140 may be expanded due to the elasticity thereof. State in this case is illustrated in FIG. 6C.

Accordingly, the foam cushion 140 may be contracted or expanded in correspondence to the change of the volume of the insulator 130 filled in the door, and may fill the gap inside the door 100.

More particularly, when the assembling of the door 100 is completed, the liquid foam may be injected to the inside of the door 100. In addition, the liquid foam may be injected through the inlet formed in the cap decorations 112 or the door liner 120.

Meanwhile, the liquid foam having a high temperature may be injected to the inside of the door 100, and be in contact with the foam cushion 140. Accordingly, the foam cushion 140 made of the polyurethane (PU) may be combined with the liquid foam which is the insulator 130 made of the same material as the material of the foam cushion, and the liquid foam may evenly spread along the rear surface of the foam cushion 140.

Accordingly, even while the liquid foam is being injected, the liquid foam may expand as illustrated in FIG. 6B, and may press the foam cushion 140 in contact with the liquid foam. Accordingly, due to the pressure of the liquid foam, the polyurethane foam of the foam cushion 140 may be compressed and the thickness thereof may become thinner.

In addition, when a predetermined time passes after the injection of the liquid foam, gas occurring during the filling may be discharged, and as the liquid foam cools, the liquid foam may stabilize and harden, and thus may form the insulator 130.

In this case, as illustrated in FIG. 6C, the liquid foam may be relatively contracted and the pressure of pressing the foam cushion 140 may be decreased and released. Accordingly, the polyurethane foam of the foam cushion 140 may be restored according the release or decrease of the pressure of the liquid foam, so the thickness of the foam cushion may become thicker than the thickness of the foam cushion in FIG. 6B or may be restored to the initial thickness of the foam cushion.

Accordingly, in the initial stage of the injection of the liquid foam, the polyurethane foam of the foam cushion 140 may be compressed, and after a predetermined time, the foam cushion 140 may act as a buffer in the process of the restoration of the polyurethane foam thereof.

When a predetermined time passes after the filling of the liquid foam is completed, the liquid foam may be completely solidified and form the insulator 130. In this case, the insulator 130 may have an even thickness on the entire surface of the foam cushion 140, and may be filled in the entirety of the inside of the door 100.

As illustrated in FIG. 5F, the assembling of the gasket at S250 is the process of assembling the gasket 124 with the perimeter of the door liner 120.

Accordingly, after the assembling of the gasket 124 is performed, the assembling of the door 100 is completed.

The scope of the present disclosure is not limited to the embodiment illustrated above, and within the technical scope as described above, many other modifications based on the present disclosure will be possible for those skilled in the art.

For example, in the embodiment, the foam cushion 140 is illustrated to be provided in the refrigerator door 100, but such a foam cushion 140 may be provided in the cabinet 10 of the refrigerator as well as in the refrigerator door 100.

That is, although not shown, the cabinet 10 of the refrigerator may include an outer casing made of metal such as steel, and an inner casing having the storage space defined inside the refrigerator and made of plastic. In addition, the insulator formed by the injection of the liquid foam may be formed in the outer casing and the inner casing.

Accordingly, the foam cushion 140 may be provided on the inner surface of the outer casing by the spray application method. Accordingly, the outer casing may not have a curve which may occur during the injection of the liquid foam.

In addition, the foam cushion 140 may be provided in the inner casing by the automatic application of the liquid foam thereto by the spray application method as required.

## Claims

1. A refrigerator door (100) comprising:
an outer plate (110) constituting an exterior of a front surface of the door (100), the outer plate (110) is made of metal;
a door liner (120) combined with the outer plate (110) and constituting an exterior of a rear surface of the door (100);
an insulator (130) provided in a space between the outer plate (110) and the door liner (120), the insulator (130) is made of polyurethane (PU) liquid foam; **characterized by**
a foam cushion (140) formed on a rear surface of the outer plate (110) and having a hardness lower than the insulator (130).

2. The door (100) of claim 1, wherein the foam cushion (140) has a volume configured to change in correspondence to a change of a volume of the insulator (130).

3. The door (100) of claim 1 or 2, wherein the foam cushion (140) is formed by a spray application method or is made of soft polyurethane (PU); and/or the insulator (130) is made of rigid polyurethane (PU).

4. The door (100) of any one of the preceding claims, wherein a hardness of the foam cushion (140) is 20~30 Shore and/or the insulator (130) has a hardness of 60-70 Shore, wherein the hardness value is a numerical value and may be measured with the 'Asker C type soft part hardness tester.

5. The door (100) of any one of the preceding claims, wherein the foam cushion (140) has a thickness of 2~3mm, and/or is formed on the rear surface of the outer plate (110) by applying polyurethane (PU) thereto such that the polyurethane has a thickness of 0.15mm.

6. The door (100) of any one of the preceding claims, wherein the foam cushion (140) is formed on an entirety of the rear surface of the outer plate (110).

7. A manufacturing method of a refrigerator door (100), the method comprises:
supplying (S210) an outer plate (110) by forming the outer plate (110);
spraying (S220) a material on a rear surface of the outer plate (110) to form a foam cushion (140);
assembling a cap decoration (112) with an upper and/or lower end of the outer plate (110);
assembling a door liner (120) with the outer plate (110) such that the door liner (120) is spaced apart from the outer plate (110);
filling liquid foam in a space between the outer plate (110) and the door liner (120) to form an insulator (130); and
assembling a gasket (124) with a perimeter of the door liner (120),
wherein the foam cushion (140) has a hardness lower than the insulator (130).

8. The method of claim 7, wherein the spraying the material is a process of forming the foam cushion (140) by applying soft polyurethane (PU) to the rear surface of the outer plate (110).

9. The method of claim 7 or 8, wherein a thickness of the polyurethane (PU) applied to the rear surface of the outer plate (110) in the spraying is 0.15mm.

10. The method of any one of the claims 7 -9, wherein the filling liquid foam is a process of forming the insulator (130) in the space between the foam cushion (140) and the door liner (120), or is a process of injecting undiluted solution of rigid polyurethane (PU) into the space between the foam cushion (140) and the door liner (120).

11. The method of any one of the claims 7 -10, wherein the foam cushion (140) is formed by applying soft polyurethane (PU) to the rear surface of the outer plate (110), the foam cushion (140) has elasticity greater than elasticity of the insulator (130), and is expanded or contracted in correspondence to contraction and expansion of the insulator (130), and fills a gap between the outer plate (110) and the door liner (120).

12. The method of any one of the claims 7 -11, wherein the filling the liquid foam is performed after the soft polyurethane (PU) applied to the rear surface of the outer plate (110) in the spraying the material has been dried.

13. The method of any one of the claims 7-12, wherein the insulator (130) is formed after the foam cushion (140) is formed on the rear surface of the outer plate (110).

14. Refrigerator comprising a door as claimed in any one of the preceding claims 1-6.

## Patentansprüche

1. Kühlschranktür (100), die Folgendes umfasst:
eine Außenplatte (110), die eine Außenseite einer Vorderseite der Tür (100) bildet, wobei die Außenplatte (110) aus Metall hergestellt ist;
eine Türverkleidung (120), die mit der Außenplatte (110) kombiniert ist und eine Außenseite der Rückseite der Tür (100) bildet;
eine Isolierung (130), die in einem Zwischenraum zwischen der Außenplatte (110) und der Türverkleidung (120) vorgesehen ist, wobei die Isolierung (130) aus flüssigem Polyurethanschaum (PU-Schaum) hergestellt wird;
**gekennzeichnet durch**
ein Schaumpolster (140), das auf der Rückseite der Außenplatte (110) ausgebildet ist und eine Härte besitzt, die niedriger als jene der Isolierung (130) ist.

2. Tür (100) nach Anspruch 1, wobei das Schaumpolster (140) ein Volumen hat, das so konfiguriert ist, dass es sich entsprechend einer Änderung eines Volumens der Isolierung (130) ändert.

3. Tür (100) nach Anspruch 1 oder 2, wobei das Schaumpolster (140) durch ein Sprühauftragungsverfahren gebildet wird oder aus einem Soft-Polyurethan (PU) hergestellt wird; und/oder wobei die Isolierung (130) aus Rigid-Polyurethan (PU) gebildet wird.

4. Tür (100) nach einem der vorhergehenden Ansprüche, wobei eine Härte des Schaumpolsters (140) 20~30 Shore beträgt und/oder die Isolierung (130) eine Härte von 60~70 Shore hat, wobei der Härtewert ein numerischer Wert ist und mit dem Härtetestgerät vom Typ Asker C, Soft Part, gemessen werden kann.

5. Tür (100) nach einem der vorhergehenden Ansprüche, wobei das Schaumpolster (140) eine Dicke von 2~3 mm hat und/oder an der Rückseite der Außenplatte (110) durch Aufbringen von Polyurethan (PU) gebildet wird, so dass das Polyurethan eine Dicke von 0,15 mm hat.

6. Tür (100) nach einem der vorhergehenden Ansprüche, wobei das Schaumpolster (140) auf der gesamten Rückseite der Außenplatte (110) ausgebildet ist.

7. Herstellungsverfahren für eine Kühlschranktür (100), wobei das Verfahren die folgenden Schritte umfasst:
Zuführen (S210) einer Außenplatte (110) durch Bilden der Außenplatte (110);
Sprühen (S220) eines Materials auf die Rückseite der Außenplatte (110), um ein Schaumpolster (140) zu bilden;
Zusammenbauen eines Aufsatzdekors (112) mit einem oberen und/oder unteren Ende der Außenplatte (110);
Zusammenbauen einer Türverkleidung (120) mit der Außenplatte (110), so dass die Türverkleidung (120) von der Außenplatte (110) beabstandet ist;
Füllen von Flüssigschaum in einen Zwischenraum zwischen der Außenplatte (110) und der Türverkleidung (120), um eine Isolierung (130) zu bilden; und
Zusammenbauen einer Dichtung (124) mit einem Umfang der Türverkleidung (120),
wobei das Schaumpolster (140) eine Härte hat, die niedriger als die der Isolierung (130) ist.

8. Verfahren nach Anspruch 7, wobei das Sprühen des Materials ein Vorgang zum Ausbilden des Schaumpolsters (140) durch Aufbringen von Soft-Polyurethan (PU) auf die Rückseite der Außenplatte (110) ist.

9. Verfahren nach Anspruch 7 oder 8, wobei eine Dicke des Polyurethan (PU), das auf die Rückseite der Außenplatte (110) beim Sprühen aufgebracht wird, 0,15 mm beträgt.

10. Verfahren nach einem der Ansprüche 7-9, wobei das Einfüllen von Flüssigschaum ein Vorgang zum Ausbilden der Isolierung (130) im Zwischenraum zwischen dem Schaumpolster (140) und der Türverkleidung (120) ist, oder ein Vorgang zum Einspritzen einer unverdünnten Lösung von Rigid-Polyurethan (PU) in den Zwischenraum zwischen dem Schaumpolster (140) und der Türverkleidung (120) ist.

11. Verfahren nach einem der Ansprüche 7-10, wobei das Schaumpolster (140) durch Aufbringen von Soft-Polyurethan (PU) auf die Rückseite der Außenplatte (110) gebildet wird, wobei das Schaumpolster (140) eine Elastizität hat, die höher als die Elastizität der Isolierung (130) ist, und entsprechend einer Kontraktion und Expansion der Isolierung (130) expandiert oder kontrahiert wird und einen Spalt zwischen der Außenplatte (110) und der Türverkleidung (120) füllt.

12. Verfahren nach einem der Ansprüche 7-11, wobei das Einfüllen des Flüssigschaums ausgeführt wird, nachdem das Soft-Polyurethan (PU), das auf die Rückseite der Außenplatte (110) beim Sprühen des Materials aufgebracht worden ist, getrocknet ist.

13. Verfahren nach einem der Ansprüche 7-12, wobei die Isolierung (130) ausgebildet wird, nachdem das Schaumpolster (140) auf der Rückseite der Außenplatte (110) ausgebildet worden ist.

14. Kühlschrank, der eine Tür nach einem der vorhergehenden Ansprüche 1-6 umfasst.

## Revendications

1. Porte de réfrigérateur (100) comportant :
une plaque extérieure (110) constituant un extérieur d'une surface avant de la porte (100), la plaque extérieure (110) étant en métal ;
un garnissage de porte (120) combiné à la plaque extérieure (110) et constituant un extérieur d'une surface arrière de la porte (100) ;
un isolant (130) agencé dans un espace entre la plaque extérieure (110) et le garnissage de porte (120), l'isolant (130) étant en mousse de polyuréthane (PU) liquide ; **caractérisée par**
un coussinet en mousse (140) formé sur une surface arrière de la plaque extérieure (110) et ayant une dureté inférieure à l'isolant (130).

2. Porte (100) selon la revendication 1, dans laquelle le coussinet en mousse (140) a un volume configuré pour varier en correspondance avec une variation d'un volume de l'isolant (130).

3. Porte (100) selon la revendication 1 ou 2, dans laquelle le coussinet en mousse (140) est formé par un procédé d'application par pulvérisation ou est en polyuréthane (PU) souple ; et/ou l'isolant (130) est en polyuréthane (PU) rigide.

4. Porte (100) selon l'une quelconque des revendications précédentes, dans laquelle une dureté du coussinet en mousse (140) est de 20 à 30 Shore et/ou l'isolant (130) a une dureté de 60 à 70 Shore, dans laquelle la valeur de dureté est une valeur numérique et peut être mesurée avec le duromètre pour pièces souples de type Asker C.

5. Porte (100) selon l'une quelconque des revendications précédentes, dans laquelle le coussinet en mousse (140) a une épaisseur de 2 à 3 mm, et/ou est formé sur la surface arrière de la plaque extérieure (110) en appliquant du polyuréthane (PU) sur celle-ci de telle sorte que le polyuréthane a une épaisseur de 0,15 mm.

6. Porte (100) selon l'une quelconque des revendications précédentes, dans laquelle le coussinet en mousse (140) est formé sur la totalité d'une surface arrière de la plaque extérieure (110).

7. Procédé de fabrication d'une porte de réfrigérateur (100), le procédé comportant les étapes consistant à :
fournir (S210) une plaque extérieure (110) en formant la plaque extérieure (110) ;
pulvériser (S220) un matériau sur une surface arrière de la plaque extérieure (110) pour former un coussinet en mousse (140) ;
assembler un cache décoratif (112) avec une extrémité supérieure et/ou inférieure de la plaque extérieure (110) ;
assembler un garnissage de porte (120) avec la plaque extérieure (110) de telle sorte que le garnissage de porte (120) est espacé de la plaque extérieure (110) ;
verser une mousse liquide dans un espace entre la plaque extérieure (110) et le garnissage de porte (120) pour former un isolant (130) ; et
assembler un joint (124) avec un périmètre du garnissage de porte (120),
dans lequel le coussinet en mousse (140) a une dureté inférieure à l'isolant (130).

8. Procédé selon la revendication 7, dans lequel la pulvérisation du matériau est un processus consistant à former le coussinet en mousse (140) en appliquant du polyuréthane (PU) souple sur la surface arrière de la plaque extérieure (110).

9. Procédé selon la revendication 7 ou 8, dans lequel une épaisseur du polyuréthane (PU) appliqué sur la surface arrière de la plaque extérieure (110) pendant la pulvérisation est de 0,15 mm.

10. Procédé selon l'une quelconque des revendications 7 à 9, dans lequel le versement de la mousse liquide est un processus consistant à former l'isolant (130) dans l'espace entre le coussinet en mousse (140) et le garnissage de porte (120), ou est un processus consistant à injecter une solution non diluée de polyuréthane (PU) rigide dans l'espace entre le coussinet en mousse (140) et le garnissage de porte (120).

11. Procédé selon l'une quelconque des revendications 7 à 10, dans lequel le coussinet en mousse (140) est formé en appliquant du polyuréthane (PU) souple sur la surface arrière de la plaque extérieure (110), le coussinet en mousse (140) a une élasticité supérieure à l'élasticité de l'isolant (130), et est expansé ou contracté en correspondance avec une contraction et une expansion de l'isolant (130), et comble un espace entre la plaque extérieure (110) et le garnissage de porte (120).

12. Procédé selon l'une quelconque des revendications 7 à 11, dans lequel le versement de la mousse liquide est réalisé après le séchage du polyuréthane (PU) souple appliqué sur la surface arrière de la plaque extérieure (110) pendant la pulvérisation du matériau.

13. Procédé selon l'une quelconque des revendications 7 à 12, dans lequel l'isolant (130) est formé après la formation du coussinet en mousse (140) sur la surface arrière de la plaque extérieure (110).

14. Réfrigérateur comportant une porte selon l'une quelconque des revendications 1 à 6 précédentes.
